# EUROPEAN PATENT SPECIFICATION

(11) **EP 4 245 115 B1**
(45) Date of publication and mention of the grant of the patent: **29.04.2026**
(21) Application number: 23161402.5
(22) Date of filing: 13.03.2023
(51) Int. Cl.: A01D 34/74

(54) **ROBOTIC GARDEN TOOL WITH IMPLEMENT HEIGHT ADJUSTMENT**
ROBOTISCHES GARTENWERKZEUG MIT GERÄTEHÖHENEINSTELLUNG
OUTIL DE JARDIN ROBOTISÉ AVEC RÉGLAGE DE LA HAUTEUR DE L'OUTIL

(30) Priority: 16.03.2022 US 202263320599 P; 18.03.2022 US 202263321536 P
(43) Date of publication of application: 20.09.2023
(73) Proprietor: Techtronic Cordless GP, Anderson, SC 29621 (US)
(72) Inventor: NG, Ho Lam, Kwai Chung (HK)
(74) Representative: Zimmermann & Partner Patentanwälte mbB

(56) References cited:
- WO-A1-2014/007696
- WO-A1-2015/040987
- WO-A1-2021/233205
- CN-U- 207 948 158

## Description

### CROSS-REFERENCE TO RELATED APPLICATIONS

This application claims priority to co-pending U.S. Provisional Patent Application No. 63/320,599, filed on March 16, 2022 (Atty. Docket No. 206737-9030-US02), and to co-pending U.S. Provisional Patent Application No. 63/321,536, filed on March 18, 2022 (Atty Docket No. 206737-9030-US03)

### BACKGROUND

The present disclosure relates to a garden tool, such as a robotic lawn mower, having a driven implement such as a blade for cutting grass or other plants.

WO 2015/040987 A1 discloses a lawn mower with blade height adjustment mechanism.

WO 2021/233205 A1 discloses a height adjusting mechanism for a lawn mower.

CN 207 948 158 U discloses a grass trimmer with an adjustable cutting height.

WO 2014/007696 A1 discloses a robotic mower having a height adjustment assembly.

### SUMMARY

In one aspect, the disclosure provides a robotic garden tool. The robotic garden tool includes a deck, an implement movably coupled to the deck, a motor configured to drive the implement, and a height adjustment mechanism configured to control the movement of the implement with respect to the deck. The height adjustment mechanism includes an interface of meshing gear teeth.

Alternatively or additionally, in any combination: the interface of meshing gear teeth includes a first set of gear teeth and a second set of gear teeth, wherein the first set of gear teeth is configured to mesh with the second set of gear teeth; the first set of gear teeth is configured to be manually actuated to effectuate movement of the second set of gear teeth; the second set of gear teeth is configured to be driven by a servomotor; the height adjustment mechanism further includes a manual actuator configured to move in response to manual actuation by an operator, wherein the implement is configured to move with respect to the deck in response to the manual actuation of the manual actuator; In an example not covered by the appended claims interface of meshing gear teeth includes a spiral rack and a bevel gear; the spiral rack defines a central axis and is configured to rotate about the central axis; the bevel gear is biased into engagement with the spiral rack and configured to move at least axially with respect to the central axis; the implement is configured to move at least axially in response to axial movement of the bevel response to axial movement of the bevel gear; the height adjustment mechanism further includes a servomotor configured to drive the bevel gear or the spiral rack; the interface of meshing gear teeth includes a linear rack and a circular gear; the circular gear is configured to be manually actuated to effectuate movement of the linear rack; the height adjustment mechanism further includes a servomotor configured to drive the linear rack or the circular gear; rotation of at least a portion of the interface about a central axis causes the implement to move at least 0.75 inches per 90 degrees of rotation; the interface may include a manual actuator.

In another aspect, the disclosure provides a cutting module for a robotic garden tool. The cutting module includes a motor configured to drive an implement, and a height adjustment mechanism configured to move the implement independently from the driving of the implement. The height adjustment mechanism includes an interface of meshing gear teeth.

Alternatively or additionally, in any combination: the interface of meshing gear teeth includes a first set of gear teeth and a second set of gear teeth, wherein the first set of gear teeth is configured to mesh with the second set of gear teeth; the first set of gear teeth is configured to be manually actuated to effectuate movement of the second set of gear teeth; the second set of gear teeth is configured to be driven by a servomotor; the interface of meshing gear teeth includes a spiral rack and bevel gear interface.

In another aspect, the disclosure provides a robotic lawn mower. The robotic lawn mower includes a deck, a blade configured for movement with respect to the deck, and a motor configured to rotate the blade about an axis of rotation. The rotation is independent from the movement with respect to the deck. The robotic lawn mower also includes a height adjustment mechanism configured to control the movement of the blade with respect to the deck. The height adjustment mechanism includes an interface of meshing gears.

Alternatively or additionally, in any combination: the interface of meshing gears includes a first set of gear teeth and a second set of gear teeth, wherein the first set of gear teeth is configured to mesh with the second set of gear teeth; the first set of gear teeth is configured to be manually actuated to effectuate movement of the second set of gear teeth; the second set of gear teeth is configured to be driven by a servomotor; the height adjustment mechanism further includes a manual actuator configured to move in response to manual actuation by an operator, wherein the blade is configured to move with respect to the deck in response to the manual actuation of the manual actuator; the interface of meshing gears includes a spiral rack and a bevel gear; the spiral rack defines a central axis and is configured to rotate about the central axis; the bevel gear is biased into engagement with the spiral rack and configured to move at least axially with respect to the central axis; the blade is configured to move at least axially in response to axial movement of the bevel gear; the height adjustment mechanism further includes a servomotor configured to drive the bevel gear or the spiral rack; In an example not covered by the appended claims interface of meshing gears includes a linear rack and a circular gear; the circular gear is configured to be manually actuated to effectuate movement of the linear rack; the height adjustment mechanism further includes a servomotor configured to drive the linear rack or the circular gear; rotation of at least a portion of the interface about a central axis causes the implement to move at least 0.75 inches per 90 degrees of rotation; the interface may include a manual actuator.

In yet another aspect, the disclosure provides a robotic garden tool. The robotic garden tool includes a deck, an implement coupled to the deck, a motor configured to drive the implement, and a height adjustment mechanism configured to control movement of the implement with respect to the deck independently from the driving of the implement. The height adjustment mechanism includes nesting ramps.

Alternatively or additionally, in any combination: the nesting ramps are movable with respect to each other between a retracted position and an extended position, and wherein the retracted position corresponds with a first position of the implement with respect to the deck, and the extended position corresponds with a second position of the implement with respect to the deck, wherein the first position is different from the second position; the motor is configured to drive the implement when the implement is in the first position and when the implement is in the second position; the nesting ramps include at least a first ramp and a second ramp, the first ramp including a first helical surface and the second ramp including a second helical surface; the first and second ramps are movable with respect to each other between a retracted position and an extended position, and wherein the retracted position corresponds with a first position of the implement with respect to the deck, and the extended position corresponds with a second position of the implement with respect to the deck, wherein the first position is different from the second position; each of the first and second ramps is rotatable about an axis, wherein a first radius defined from the axis to the first helical surface is smaller than a second radius defined from the axis to the second helical surface to allow nesting of the first ramp with respect to the second ramp; the nesting ramps include at least a first ramp and a second ramp, the first and second ramps being rotatable about an axis, wherein a first radius defined from the axis to the first ramp is smaller than a second radius defined from the axis to the second ramp to allow nesting of the first ramp into the second ramp; the first ramp is configured to nest in the second ramp in a retracted position; the first and second ramps are movable with respect to each other between a retracted position and an extended position.

In still another aspect, the disclosure provides a cutting module for a robotic garden tool. The cutting module includes a motor configured to drive an implement, and a height adjustment mechanism configured to move the implement independently from the driving of the implement. The height adjustment mechanism including nesting ramps.

Alternatively or additionally, in any combination: the nesting ramps are movable with respect to each other between a retracted position and an extended position, and wherein the retracted position corresponds with a first position of the implement, and the extended position corresponds with a second position of the implement, wherein the first position is different from the second position; the motor is configured to drive the implement when the implement is in the first position and when the implement is in the second position; the nesting ramps include at least a first ramp and a second ramp, the first ramp having a first helical surface and the second ramp having a second helical surface; the first and second ramps are movable with respect to each other between a retracted position and an extended position, and wherein the retracted position corresponds with a first position of the implement, and the extended position corresponds with a second position of the implement, wherein the first position is different from the second position; each of the first and second ramps is rotatable about an axis, wherein a first radius defined from the axis to the first helical surface is smaller than a second radius defined from the axis to the second helical surface to allow nesting of the first ramp with respect to the second ramp; the nesting ramps include at least a first ramp and a second ramp, the first and second ramps being rotatable about an axis, wherein a first radius defined from the axis to the first ramp is smaller than a second radius defined from the axis to the second ramp to allow nesting of the first ramp with respect to the second ramp; the first ramp is configured to nest in the second ramp in a retracted position; the first and second ramps are movable with respect to each other between a retracted position and an extended position.

In another aspect still, the disclosure provides a robotic lawn mower. The robotic lawn mower includes a deck, a blade configured for movement with respect to the deck, and a motor configured to rotate the blade about an axis of rotation. The rotation is independent from the movement with respect to the deck. The robotic lawn mower further includes a height adjustment mechanism configured to control the movement of the blade with respect to the deck. The height adjustment mechanism including nesting ramps.

Alternatively or additionally, in any combination: the nesting ramps include at least a first ramp and a second ramp, wherein each of the first and second ramps is rotatable about an axis, wherein the first and second ramps are movable with respect to each other between a retracted position and an extended position, and wherein the retracted position corresponds with a first position of the blade, and the extended position corresponds with a second position of the blade, wherein the first position is different from the second position; the nesting ramps are movable with respect to each other between a retracted position and an extended position, and wherein the retracted position corresponds with a first position of the blade with respect to the deck, and the extended position corresponds with a second position of the blade with respect to the deck, wherein the first position is different from the second position; the motor is configured to drive the blade when the blade is in the first position and when the blade is in the second position; the nesting ramps include at least a first ramp and a second ramp, the first ramp including a first helical surface and the second ramp including a second helical surface; the first and second ramps are movable with respect to each other between a retracted position and an extended position, and wherein the retracted position corresponds with a first position of the blade with respect to the deck, and the extended position corresponds with a second position of the blade with respect to the deck, wherein the first position is different from the second position; each of the first and second ramps is rotatable about an axis, wherein a first radius defined from the axis to the first helical surface is smaller than a second radius defined from the axis to the second helical surface to allow nesting of the first ramp with respect to the second ramp; the nesting ramps include at least a first ramp and a second ramp, the first and second ramps being rotatable about an axis, wherein a first radius defined from the axis to the first ramp is smaller than a second radius defined from the axis to the second ramp to allow nesting of the first ramp into the second ramp; the first ramp is configured to nest in the second ramp in a retracted position; the first and second ramps are movable with respect to each other between a retracted position and an extended position.

Other aspects of the disclosure will become apparent by consideration of the detailed description and accompanying drawings.

### BRIEF DESCRIPTION OF THE DRAWINGS

Fig. 1 is a top perspective view of an autonomous lawn mower embodying the disclosure.
Fig. 2 is a cross-sectional view of the autonomous lawn mower of Fig. 1 taken through line 2-2 in Fig. 1.
Fig. 3 is a schematic diagram illustrating a control system for the lawn mower of Fig. 1.
Fig. 4 is a perspective view of a cutting module with height adjustment mechanism of the autonomous lawn mower of Fig. 1.
Fig. 5 is a perspective view of an example of a height adjustment mechanism not covered by the appended claims.
Fig. 6 is a perspective view of a portion of the height adjustment mechanism of Fig. 4 or 5.
Fig. 7 is a top perspective view of an example of a height adjustment mechanism not covered by the appended claims. of the autonomous lawn mower of Fig. 1, the height adjustment mechanism in a first position and having a guard shown as transparent for illustrative purposes.
Fig. 8 is a top perspective view of the cutting module with height adjustment mechanism of Fig. 7, the height adjustment mechanism in a second position.
Fig. 9 is a top perspective view of the cutting module with height adjustment mechanism of Fig. 7, the height adjustment mechanism in a third position.
Fig. 10 is a cross-sectional view of the cutting module with height adjustment mechanism of Fig. 7.
Fig. 11 is a bottom perspective exploded view of a portion of the height adjustment mechanism of Fig. 7.
Fig. 12 is a top orthogonal view of a portion of the height adjustment mechanism of Fig. 7.
Fig. 13 is a top perspective view of the portion of the height adjustment mechanism of Fig. 12.
Fig. 14 is a side view of the height adjustment mechanism of Fig. 7 in the first position.
Fig. 15 is a side view of the height adjustment mechanism of Fig. 8 in the second position.
Fig. 16 is a side view of the height adjustment mechanism of Fig. 9 in the third position.
Fig. 17 is a top view of the height adjustment mechanism of Fig. 14 in the first position.

### DETAILED DESCRIPTION

Before any implementations of the disclosure are explained in detail, it is to be understood that the disclosure is not limited in its application to the details of construction and the arrangement of components set forth in the following description or illustrated in the following drawings. The disclosure is capable of other implementations and of being practiced or of being carried out in various ways. Also, it is to be understood that the phraseology and terminology used herein are for the purpose of description and should not be regarded as limiting. The terms "approximately", "about", "generally", "substantially", and the like should be understood to mean within standard tolerances, as would be understood by one of ordinary skill in the art, unless other definitions are provided for certain contexts below. The term "helical surface" is defined herein as a surface that includes a helical curve. A "helical curve" is a curve on a conical or cylindrical surface (which may be an imaginary conical or cylindrical surface for purposes of definition only) other than a two-dimensional arc. Thus, to be "helical" means to include a helical curve on a surface.

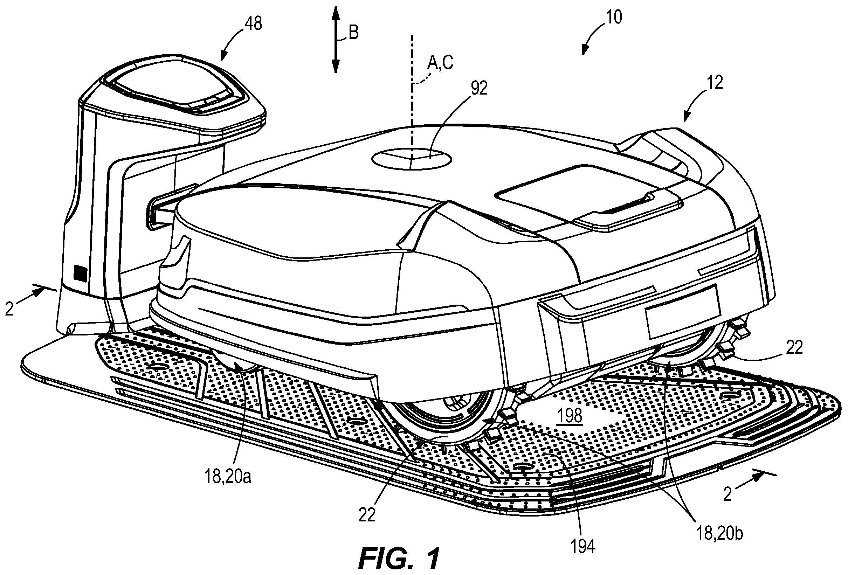

Figs. 1-2 illustrate a garden tool system 10. For example, the garden tool system 10 may include a garden tool 12, such as a lawn mower 12 (as shown), or in other implementations may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 12 may include a vacuum cleaner, a trimmer, a string trimmer, a brush cutter, a hedge trimmer, a sweeper, a cutter, a plow, a debris blower, a snow blower, etc. In the illustrated implementation, the garden tool system 10 includes the lawn mower 12 and a charging station 48. The garden tool 12 may be autonomous, semi-autonomous, or not autonomous.

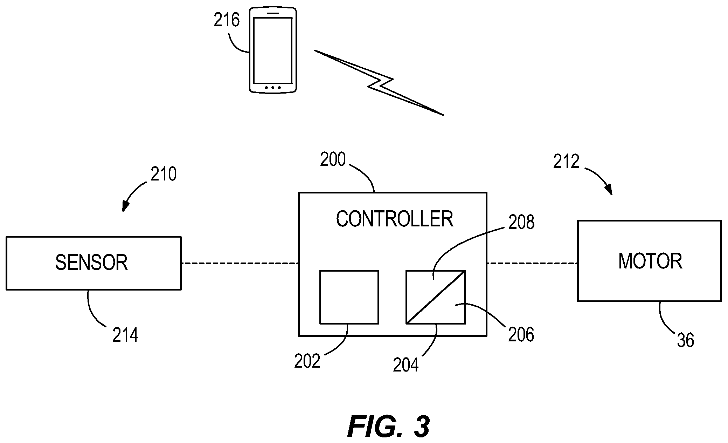

For example, as illustrated in Fig. 3, the lawn mower 12 may include a controller 200 having a programmable processor 202 (e.g., a microprocessor, a microcontroller, or another suitable programmable device), a memory 204, and a human-machine interface 216 (which may include a mobile device). The memory 204 may include, for example, a program storage area 206 and a data storage area 208. The program storage area 206 and the data storage area 208 can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller 200 may also, or alternatively, include integrated circuits and/or analog devices, e.g., transistors, comparators, operational amplifiers, etc., to execute the logic and control signals described herein. The controller 200 includes a plurality of inputs 210 and outputs 212 to and from various components of the lawn mower 12. The controller 200 is configured to provide control signals to the outputs 212 and to receive data and/or signals (e.g., sensor data from a sensor 214, user input signals, etc.) from the inputs 210. The inputs 210 and outputs 212 are in communication with the controller 200, e.g., by way of hard-wired and/or wireless communications such as by satellite, internet, mobile telecommunications technology, a frequency, a wavelength, Bluetooth^{®}, or the like. The controller 200 may include a navigation system, which may include one or more of a global positioning system (GPS), beacons, sensors such as image sensors, ultrasonic sensors, wire sensors, and an algorithm for navigating an area to be mowed. However, in other implementations, the lawn mower 12 may be non-autonomous.

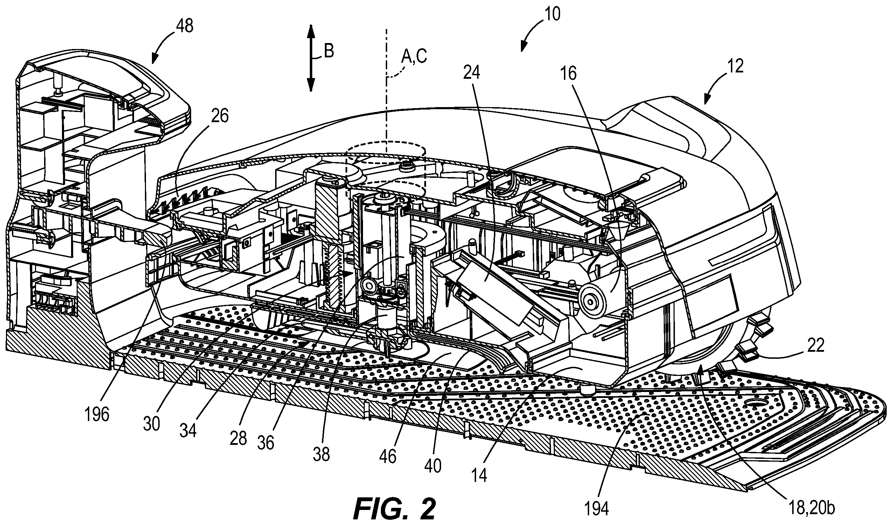

With reference to Fig. 2, the lawn mower 12 includes a deck 14 for supporting various components of the lawn mower 12, as will be described in greater detail below. The lawn mower 12 includes at least one prime mover 16 for providing tractive effort to move the lawn mower 12 across a support surface, such as the charging station 48 or a lawn to be mowed. The at least one prime mover 16 may be supported by the deck 14. For example, the at least one prime mover 16 may include one or more electric motors 16 in the illustrated implementation. However, in other implementations the prime mover 16 may include another type of motor, a gasoline engine, or the like, in any suitable quantity and combination.

The lawn mower 12 also includes a plurality of wheels 18 (Fig. 1), which may be supported by the deck (Fig. 2), for converting the tractive effort into motion of the lawn mower 12 on the support surface. Each of the plurality of wheels 18 supports a tire 22 in the illustrated implementation. However, the plurality of wheels 18 may support any combination of one or more of tires, continuous tracks, or the like in other implementations. The plurality of wheels 18 includes two front wheels 20a and two rear wheels 20b, but other quantities of wheels may be employed in other implementations. In the illustrated implementation, each of the two rear wheels 20b is operatively coupled to its own prime mover 16 (such as two electric motors, one for each respective rear wheel 20b) to apply torque thereto, and the two front wheels 20a are not driven. However, other torque-transmission arrangements can be used in other implementations with any quantity and combination of driven and non-driven wheels, any number of wheels being driven by a single prime mover, and any number of prime movers.

The lawn mower 12 includes a power source 24 (Fig. 2), such as a battery, for powering the at least one prime mover 16 such that the lawn mower 12 can perform a lawn mowing operation in a cordless fashion. The power source 24 may include one or more lithium-ion battery cells, and/or other battery chemistries. The power source 24 may be removable from the lawn mower 12. In other implementations, the at least one prime mover 16 may be powered by other power sources, such as solar panels, fuel cells, compressed fluid, fuel, or the like. The lawn mower 12 includes a battery charging contact 26 for receiving a charge from an external power source (not shown) for charging the power source 24.

With reference to Figs. 1 and 2, the charging station 48 includes a docking pad 194 and a battery charging terminal 196. The docking pad 194 defines a generally planar surface 198, with "generally planar surface" being defined as providing enough of a portion of a planar surface, i.e., comprised of a single continuous surface or a plurality of separated (discontinuous) surfaces, for the lawn mower 12 to drive up onto and be supported by during a charging operation. The battery charging terminal 196 is configured to engage with the battery charging contact 26 on the lawn mower 12 to provide an electrical connection therebetween for charging the power source 24 (e.g., battery).

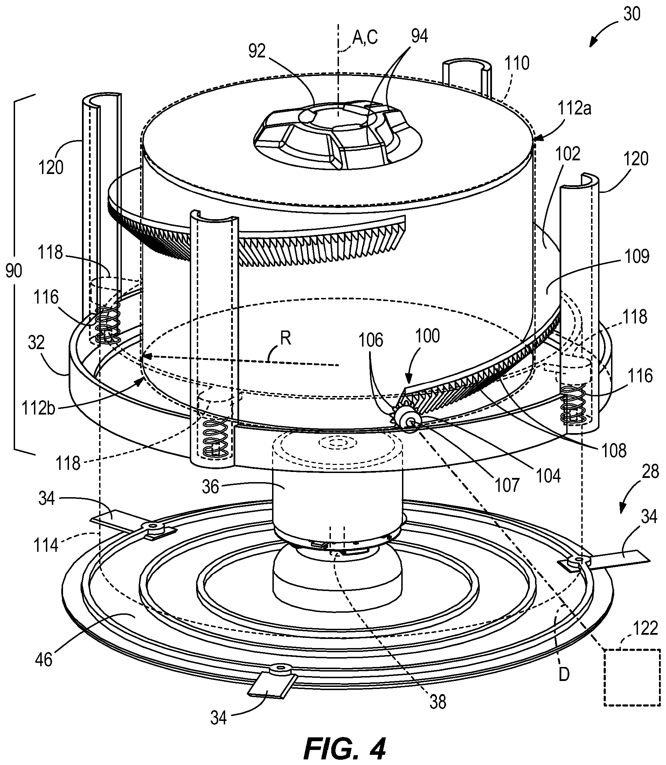

The lawn mower 12 includes a cutting module 30 (Fig. 2), which may be supported by the deck 14. As best illustrated in Fig. 4, the cutting module 30 includes a cutting module mount 32 fixed with respect to the deck 14 or formed as part of the deck 14. With reference to Fig. 2, the cutting module 30 also includes a blade 34 and a motor 36 configured to move the blade 34 about an axis of rotation A. The cutting module 30 includes a blade module 28 (which is one example herein of a driven implement) and a motor 36 configured to drive the blade module 28. In the illustrated implementation, the blade module 28 includes one or more of the blades 34, and the motor 36 drives the blade module 28 about an axis of rotation A. In other implementations, the blade module 28 includes a reciprocal trimming unit (not shown) having linearly reciprocating trimming blades, and the motor 36 drives the trimming blades of the trimming unit to move reciprocally. In yet other implementations, the blade module 28 includes a string (not shown), as in a string trimmer, and the motor 36 drives the string about the axis of rotation A. In yet other implementations, the blade module 28 includes a roller blade (not shown), such as a reel blade or squirrel cage blade, and the motor 36 drives the roller blade to roll or rotate about an axis that is generally parallel with the support surface (e.g., generally horizontal). In yet other implementations, the blade module 28 includes an auger (not shown), such as snow blower auger, and the motor 36 drives the auger to roll or rotate about an axis that is generally parallel with the support surface (e.g., generally horizontal). In yet other implementations, the blade module 28 includes a fan (not shown), such as a blower fan, and the motor 36 drives the fan in rotation. Other types of blades are possible in addition to the examples given above. Furthermore, other types of implements are also possible, including the blades above as well as other non-blade implements that are driven by the motor 36, such as brushes.

The motor 36 includes a rotatable drive shaft 38 operably coupled to the blade module 28 (or any other implement in accordance with any implementation of the disclosure). In the illustrated implementation, the drive shaft 38 is disposed coaxially with the axis of rotation A. In other implementations, the drive shaft 38 may be disposed parallel with (e.g., offset from) or transverse to the axis of rotation A. The axis of rotation A defines an axial direction B. The axial direction B is typically a vertical direction with respect to the support surface on which the lawn mower 12 rides, e.g., up and down with respect to gravity, when the lawn mower 12 is in use. However, in certain implementations, the axis of rotation A (and thus the axial direction B) may be tilted relative to the vertical direction, for example by 1 to 10 degrees, preferably by 3 to 8 degrees, and more preferably by 5 to 6 degrees. In certain implementations, the axis of rotation A may be tilted forward in the travelling direction relative to the vertical direction.

The blade module 28 (Fig. 2) may include the one or more blades 34 supported by a blade holder 46. In the illustrated implementation, each of the one or more blades 34 is configured to cut vegetation, such as grass and other plants. In some implementations, each of the one or more blades 34 may include one or more flailing blades and/or strings for cutting vegetation. In yet other implementations, one or more blades 34 may include any other type of blade for cutting vegetation, such as a knife-edge cutter, a serrated cutter, a roller cutter, any of the cutters described above, or any other cutter. In yet other implementations, the blade holder 46 may support other types of blades, such as fan blades, an auger, etc. In yet other implementations, the blade holder 46 may be formed integrally with a blade or blades, a knife edge or edges, teeth, a string or strings, or any other cutter(s) in any combination.

The cutting module 30 also includes a height adjustment mechanism 90 (Figs. 4-5) for moving the blade 34 or other implement at least partially up and down in the axial direction B ("at least partially" meaning the blade 34 has at least a component of movement in said direction, which may be vertical or tilted, but may or may not additionally move in other directions). The height adjustment mechanism 90 includes a manual actuator 92 configured to move in response to manual actuation by an operator. The manual actuator 92 is accessible to the operator's hand from outside the lawn mower 12 for manual engagement, as illustrated in Fig. 1. For example, the manual actuator 92 includes a grip surface 94, such as a tri-lobular tab in the illustrated implementation, that is disposed externally on the lawn mower 12 as illustrated in Fig. 1. In the illustrated implementation, the manual actuator 92 is rotatable about the axis of rotation A of the blade. However, in other implementations, the manual actuator 92 may be rotatable about a different axis, which may be parallel to or transverse to the axis of rotation A of the blade 34. The blade 34 is configured to move in the axial direction B in response to movement of the manual actuator 92, as will be described in greater detail below. **In** the illustrated implementation, the blade 34 is movable about 1.57 inches (40 mm) in the axial direction B between a raised position in which the blade 34 is fully raised and a lowered position (Fig. 4) in which the blade 34 is fully lowered. The blade 34 is movable at least 1.5 inches (38.1 mm) in the axial direction B in some implementations, and may be movable at least 1.57 inches (40 mm), and may be movable more than 1.57 inches (40 mm) in the axial direction B in some implementations. In certain implementations, the cutting height (height from the blade 34 to the ground on which the lawn mower 12 rests) changes from about 1.96 inches (50mm) off the ground in the lowered position to about 3.54 inches (90mm) off the ground in the raised position. In certain implementations, the cutting height changes from about 0.78 inches (20mm) off the ground in the lowered position to about 2.36 inches (60mm) off the ground in the raised position.

With reference to the implementation of Fig. 4, the height adjustment mechanism 90 also includes an interface 100 with meshing gear teeth. The manual actuator 92 is operably coupled to the interface 100. In the illustrated implementation, the interface 100 may be referred to as a spiral rack-bevel gear interface 100 and is defined by a spiral rack 102 and a bevel gear 104. In other implementations, some of which are described in greater detail herein, other types of interfaces 100 may be employed. For example, a spur gear may be employed in place of a bevel gear. The bevel gear 104 includes bevel teeth 106 and a bevel shaft 107. The bevel gear 104 is rotatable about a gear shaft axis D defined by the bevel shaft 107. In the illustrated implementation, the spiral rack 102 is rotatable about a central axis C and the bevel gear 104 translates axially with respect to the central axis C while being rotatable about the gear shaft axis D. The spiral rack 102 is at least partially helical about the central axis C and includes a plurality of rack teeth 108 configured to mesh with bevel teeth 106 on the bevel gear 104. In the illustrated implementation, the manual actuator 92 is rotatable about the central axis C, which is coincident with the axis of rotation A. Thus, in the illustrated implementation the central axis C also defines the axial direction B. However, in other implementations, the central axis C and the axis of rotation A need not be coincident and may be offset (parallel), or transverse, to each other.

In the illustrated implementation, the spiral rack 102 includes a helical surface 109 extending 360 degrees about the central axis C. The rack teeth 108 protrude from the helical surface 109. In other implementations, the helical surface 109 may have other configurations. For example, the helical surface 109 may extend less than 360 degrees about the central axis C to increase the pitch. As another example, the helical surface 109 may be broken into two separate helical surfaces extending 180 degrees each about the central axis C, or three separate helical surfaces extending 120 degrees each about the central axis C, etc., and a corresponding number of bevel gears 104 may be employed. In the illustrated implementation, the helical surface 109 has a pitch angle of about 114.3 degrees per inch (with "about" meaning +/- 10 degrees per inch) (the pitch angle is about 4.5 degrees per mm). In some implementations, the pitch angle may be between about 50.8 degrees per inch and about 152.4 degrees per inch (between about 2 degrees per mm and about 6 degrees per mm). The helical surface 109 has a radius R (from the central axis C as shown in Fig. 4) of about 2.36 inches (with "about" meaning +/- 0.2 inches) (the radius R is about 60 mm). In other implementations, the radius R may be between about 0.78 inches and about 9.9 inches (about 20mm - 250mm), or between about 1.1 inches and about 7.9 inches (about 30mm-200mm), or between about 1.5 inches and about 5.9 inches (about 40mm-150mm), or between about 1.9 inches and about 3.9 inches (about 50mm-100mm), or between about 2.3 inches and about 3.2 inches (about 60mm-80mm). For example, the interface 100 is configured such that the blade 34 is displaced in the axial direction B about 1.5 inches (38 mm) or more in response to an angular range of 180 degrees of rotation of the manual actuator 92. In other implementations, the blade 34 may be displaced in the axial direction B about 1.57 inches (40 mm) or more in response to 180 degrees of rotation of the manual actuator 92.

With reference to Fig. 4, the interface 100 is disposed within a cylindrical volume 110 defined circumferentially by the spiral rack 102 (e.g., by the helical surface 109) and bounded axially (e.g., with respect to the central axis C) by upper and lower distal ends 112a, 112b of the spiral rack 102. In the illustrated implementation, the axis of rotation A intersects the cylindrical volume 110. In the illustrated implementation, the cylindrical volume 110 is centered with respect to the axis of rotation A. In other implementations, the axis of rotation A may be disposed in other locations that intersect the cylindrical volume 110, e.g., parallel to the central axis C or transverse to the central axis C (e.g., if the axis of rotation A is tilted as described above). In yet other implementations, the axis of rotation A may be transverse to the central axis C and need not intersect the cylindrical volume 110. In the illustrated implementation, the axis of rotation A intersects the manual actuator 92 and, more specifically, is coaxial with the manual actuator 92. Furthermore, the manual actuator 92 is rotatable about the central axis C, and therefore also about the axis of rotation A. However, in other implementations, other configurations of the manual actuator 92 are possible. For example, the central axis C need not be coaxial with the axis of rotation A of the blade and may be parallel to (offset) or transverse to the axis of rotation A of the blade in other implementations.

The height adjustment mechanism 90 includes a motor mount 114 configured to support the motor 36 in a generally fixed relation thereto, which may include a degree of movement or damping to adapt to vibrations, external force, etc., or may be rigidly fixed. The motor mount 114 is axially slidable, in the direction of the central axis C, with respect to the cutting module mount 32. The motor mount 114 may be fixed against rotational movement with respect to the deck 14 such that the motor mount 114 is configured to translate in the direction of the axis C without rotation with respect to the deck 14. In the illustrated implementation, the motor mount 114 includes one or more lobes 118 that guide the motor mount 114 to move in the direction of the axis C along tracks 120 in the cutting module mount 32. The motor mount 114 is movable between the raised position in which the blade 34 is fully raised and the lowered position (Fig. 4) in which the blade 34 is fully lowered. In the illustrated implementation, the motor mount 114 also supports the drive shaft 38 and the blade 34 in fixed relation therewith such that the motor mount 116, the motor 36, the drive shaft 38, and the blade 34 move together as one unit in the direction of the axis C in response to movement of the manual actuator 92.

In the illustrated implementation, the bevel gear is rotatably coupled to the motor mount 114 by way of the bevel shaft 107. The manual actuator 92 is operatively coupled to the spiral rack 102. As illustrated, the manual actuator 92 is fixed to the spiral rack 102, such that the manual actuator 92 and the spiral rack 102 rotate together as one unit. However, in other implementations, an intermediate transmission may be disposed between the manual actuator 92 and the spiral rack 102.

Thus, in the illustrated implementation, manual rotation of the manual actuator 92 causes rotation of the spiral rack 102. The rack teeth 108 are configured to mesh with the bevel teeth 106. Rotation of the spiral rack 102 thereby causes the bevel gear 104 to rotate about the gear shaft axis D. The bevel gear 104, being biased upwards away from the support surface, rises and lowers in the direction of the central axis C to follow the spiral rack 102 as the spiral rack 102 rotates about the central axis C. The motor mount 114 rises and lowers in the direction of the central axis C with the bevel gear 104, as does anything fixed with the motor mount 114, such as any combination of one or more of the motor 36, the blade 34, the blade holder 46, etc.

In other implementations, the bevel gear 104 may be driven by a servomotor 122, which is illustrated schematically in Fig. 4. The servomotor 122 is configured to drive the bevel gear 104 to rotate about the gear shaft axis D. In such an implementation, the manual actuator 92 need not be employed, and the height adjustment mechanism 90 is controlled electronically through the servomotor 122 by way of the controller 200. In yet other implementations, the servomotor 122 may be configured to drive the spiral rack 102.

The height adjustment mechanism 90 also includes one or more biasing members 116, such as coil springs (as illustrated), one or more leaf springs, one or more cup springs, any other type of spring or resilient member, or the like, for biasing the motor mount 114 upwards in the direction of the central axis C (away from the support surface). The one or more biasing members 116 restore the motor mount 114 to its highest position (the raised position). Specifically, each of the one or more biasing members 116 is disposed between the cutting module mount 32 and the motor mount 114. Even more specifically, each of the one or more biasing members 116 is disposed between a respective one of the lobes 118 and the cutting module mount, and each of the one or more biasing members 116 is received in the respective track 120. In the illustrated implementation, the one or more biasing members 116 are each in direct engagement with the cutting module mount 32 and the motor mount 114; however, indirect engagement may be employed in other implementations. The one or more biasing members 116 allow the cutting module 30 to float with respect to the deck 14, and may therefore allow for movement of the cutting module 30 in more than just the direction of the central axis C.

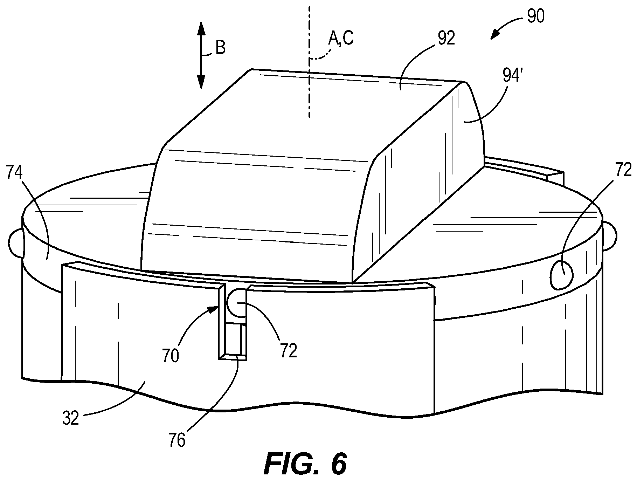

With reference to Fig. 6, which illustrates the manual actuator 92 having another implementation of a grip surface 94', the height adjustment mechanism 90 may include a detent mechanism 70 operatively coupled to the manual actuator 92 for producing audible and/or tactile feedback and to retain the manual actuator 92 in a plurality of discrete angular positions. Markings (not shown), such as height indicators, may be provided at predetermined intervals of rotation of the manual actuator 92 corresponding to different cutting heights. The manual actuator 92 is also retained at a fixed height (in the axial direction B) with respect to the deck 14 as the manual actuator 92 rotates. In the illustrated implementation, the detent mechanism 70 includes spring-biased balls 72 disposed about a circumference of the manual actuator 92 and extending radially from an outer circumferential surface 74 of the manual actuator 92. The spring-biased balls 72 are biased radially outwards from the outer circumferential surface 74 towards the cutting module mount 32 (or towards any other part coupled to, or fixed with respect to, the deck 14, or towards the deck 14 itself). The illustrated detent mechanism 70 includes ten spring-biased balls 72 arranged at 36 degree intervals around the outer circumferential surface 74; however, any number and spacing of one or more spring-biased balls 72 (or other detent mechanisms) may be employed in other implementations. The detent mechanism 70 engages the cutting module mount 32 and registers in an aperture 76 on the cutting module mount 32. In other implementations, the aperture 76 may be disposed on any other part coupled to, or fixed with respect to, the deck 14, or on the deck 14 itself. The aperture 76 on the cutting module mount 32 may include a notch (as illustrated), a recess, a groove, a pocket, or the like. In the illustrated implementation, two apertures 76 that are diametrically opposed are employed; however, in other implementations any number of one or more apertures 76 arranged in any suitable fashion for engagement with the detent mechanism 70 may be employed. In yet other implementations, the detent mechanism 70 may be disposed on the cutting module mount 32 (or on any other part coupled to, or fixed with respect to, the deck 14, or on the deck 14 itself) and the one or more apertures 76 may be disposed on the manual actuator 92.

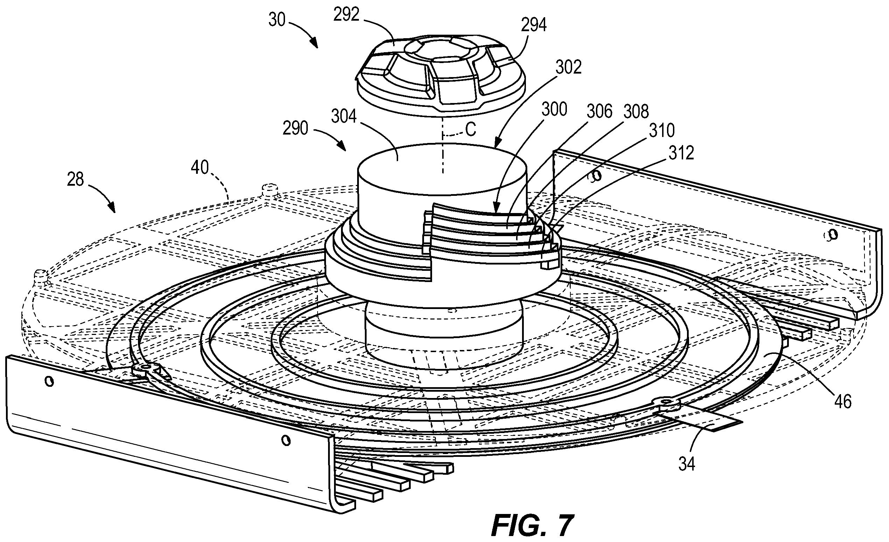

The cutting module 30 also includes a guard 40 (Figs. 2 and 7) covering a portion of the blade 34. The guard 40 may have any suitable configuration for covering a portion of the blade 34 and may cover portions of the blade 34 on a bottom of the blade 34, around circumferential sides of the blade 34, and/or over the blade 34, in any combination. In the illustrated implementation, the guard 40 is configured to move up and down with blade 34, in fixed relation therewith, in response to movement of the manual actuator 92. However, in other implementations, the guard 40 may remain fixed with respect to the deck 14 while the blade 34 is adjusted.

The cutting module 30 is modular and can be removed from the lawn mower 12 as a unit and replaced as a unit.

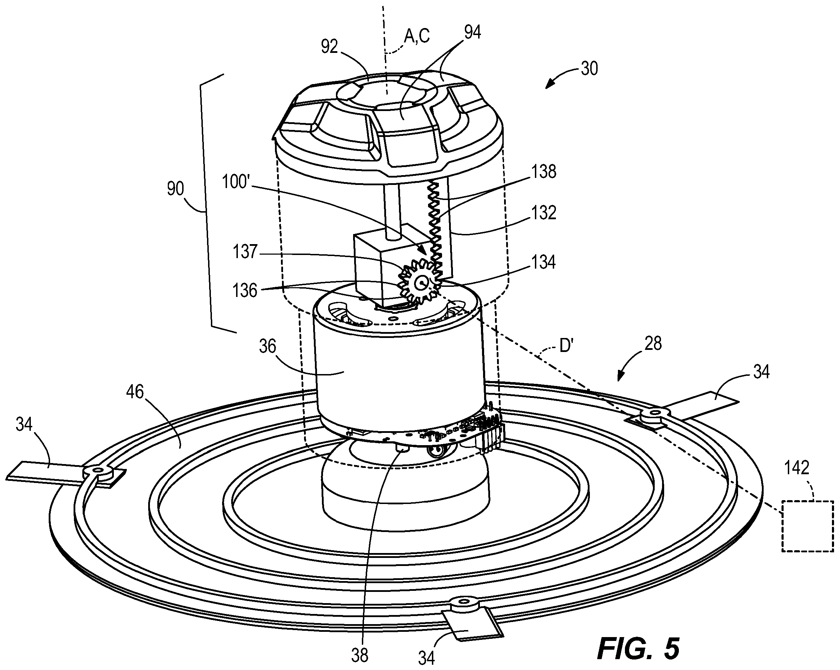

Fig. 5 illustrates an example of an interface 100' with meshing gear teeth. Only the differences between the interface 100 and the interface 100' will be described herein. It should be understood that other features of the height adjustment mechanism 90 shown in Figs. 4 and 6 are the same when employed with the interface 100' shown in Fig. 5 instead of the interface 100 shown in Fig. 4. In the illustrated implementation, the interface 100' may be referred to as a linear rack-circular gear interface 100' and is defined by a linear rack 132 and a circular gear 134. In other implementations, other types of interfaces 100' may be employed. The circular gear 134 includes gear teeth 136 and a gear shaft 137. The manual actuator 92 may be rotatable about the central axis C and is operably coupled to the circular gear 134. The circular gear 134 is rotatable about a gear shaft axis D' defined by the gear shaft 137 in response to manual actuation of the manual actuator 92. The linear rack 132 includes rack teeth 138 arranged generally linearly. The rack teeth 138 are configured to mesh with the gear teeth 136 such that rotation of the circular gear 134 causes linear motion of the linear rack 132, e.g., in the direction of the central axis C or in other linear directions in other implementations. The motor mount 114 may be coupled to the linear rack 132 such that the motor mount 114 moves with the linear rack 132. All components supported by the motor mount 114 (as described above with respect to Fig. 4) also move with the linear rack 132. In the illustrated implementation, the linear rack 132 and the motor mount 114 move in the direction of the central axis C; however, the motor mount 114 may move in other directions in other implementations.

in this example, the circular gear 134 may be driven by a servomotor 142, which is illustrated schematically in Fig. 5. The servomotor 142 is configured to drive the circular gear 134 to rotate about the gear shaft axis D'. In such an implementation, the manual actuator 92 need not be employed, and the height adjustment mechanism 90 is controlled electronically through the servomotor 142 by way of the controller 200. In yet other implementations, the servomotor 142 may be configured to drive the linear rack 132.

In operation, blade height adjustment may be achieved manually by an operator or electronically by way of the servomotor 122, 142. For manual adjustment, the operator engages the grip surface 94 of the manual actuator 92 and moves the manual actuator 92 (e.g., rotates the manual actuator 92 about the central axis C in the illustrated implementation). At predefined angular intervals, the operator may hear and/or feel feedback from the manual actuator 92. For each angular interval of rotation of 36 degrees, the blade height changes by about 0.314 inches (8 mm) (or more in some implementations). The blade height changes by at least 1.5 inches (38 mm) or more in response to the manual actuator 92 being rotated 180 degrees. The operator rotates the manual actuator 92 in a first direction (e.g., clockwise) to lower the blade 34 (or other implement) and in a second direction (e.g., counterclockwise) to raise the blade 34 (or other implement). The second direction is opposite the first direction. The biasing members 116 provide a force to return the blade 34 towards the raised position when the manual actuator 92 is rotated in the second direction.

Although the disclosure has been described in detail with reference to preferred implementations, variations and modifications exist within the scope and spirit of one or more independent aspects of the disclosure as described.

Thus, the disclosure provides, among other things, a garden tool 12, such as an autonomous lawn mower, with blade height adjustment.

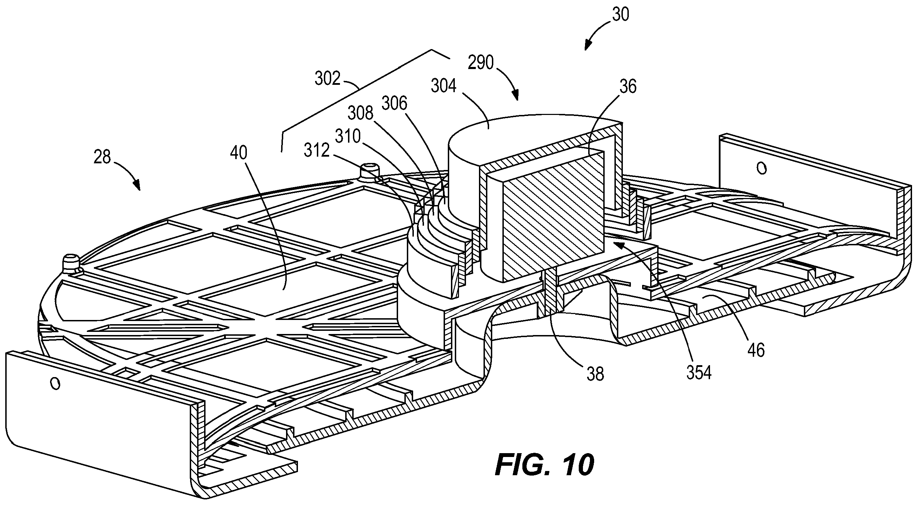

Figs. 7-17 illustrate an example of a height adjustment mechanism 290. The cutting module 30 may additionally or alternatively include the height adjustment mechanism 290 (Figs. 7-17) for moving the blade 34 or other implement at least partially up and down in the axial direction B ("at least partially" meaning the blade 34 has at least a component of movement in said direction, which may be vertical or tilted, but may or may not additionally move in other directions). The height adjustment mechanism 290 includes a manual actuator 292 (Fig. 7) configured to move in response to manual actuation by an operator. The manual actuator 292 is accessible to the operator's hand from outside the lawn mower 12 for manual engagement, as illustrated in Fig. 1. For example, the manual actuator 292 includes a grip surface 294, such as a tri-lobular tab in the illustrated implementation, that is disposed externally on the lawn mower 12 as illustrated in Fig. 1. In the illustrated implementation, the manual actuator 292 is rotatable about an axis C, which may coincide with the axis of rotation A of the blade. However, in other implementations, the axis C may be offset parallel to the axis of rotation A or transverse to the axis of rotation A of the blade 34. The blade 34 is configured to move at least partially in the axial direction B in response to movement of the manual actuator 292, as will be described in greater detail below. In the illustrated implementation, the blade 34 is configured to move in the axial direction of the axis C, which, in the illustrated implementation, is the same as the axial direction B. The terms "axial direction of the axis C" and "axial direction B" may therefore be used interchangeably herein. However, in other implementations, the axial direction of the axis C may be transverse to the axial direction B.

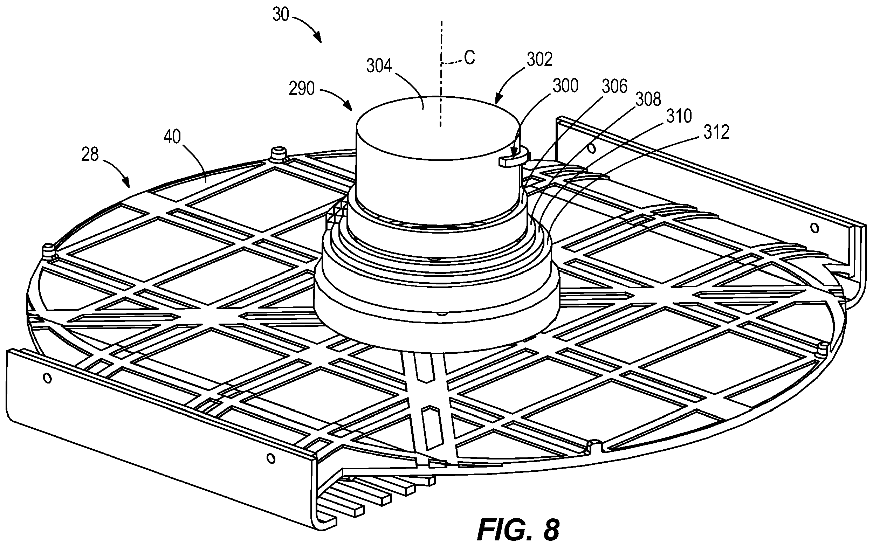

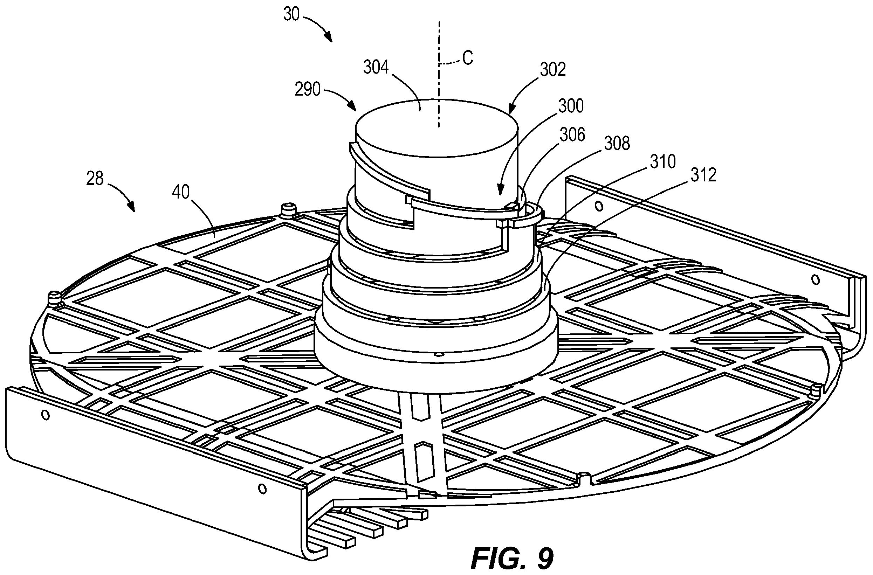

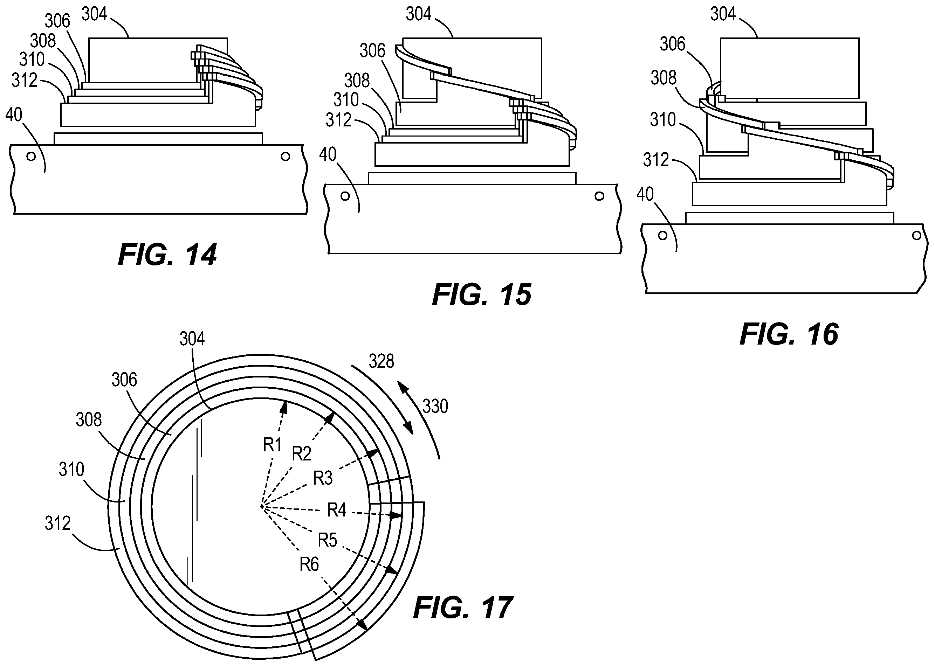

In the illustrated example the blade 34 is movable about 1.57 inches (40 mm) in the axial direction of the axis C between a raised position (Figs. 7 and 14) in which the blade 34 is fully raised and a lowered position (Figs. 9 and 16) in which the blade 34 is fully lowered. An intermediate position (Figs. 8 and 15) is disposed between the raised position and the lowered position, and the blade 34 is infinitely adjustable between the raised position and the lowered position. The blade 34 is movable at least 1.5 inches (38.1 mm) in the axial direction of the axis C in some implementations, and may be movable at least 1.57 inches (40 mm), and may be movable more than 1.57 inches (40 mm) in the axial direction of the axis C in some implementations. In certain implementations, the cutting height (height from the blade 34 to the ground/support surface) changes from about 1.96 inches (50 mm) off the ground in the lowered position to about 3.54 inches (90 mm) off the ground in the raised position. In certain implementations, the cutting height changes from about 0.78 inches (20 mm) off the ground in the lowered position to about 2.36 inches (60 mm) off the ground in the raised position.

The height adjustment mechanism 290 also includes an interface 300 with nesting ramps 302 (which may also be referred to as nesting telescoping ramps 302, or telescoping ramps 302, herein). The manual actuator 292 is operably coupled to the nesting ramps 302. In the illustrated implementation, the manual actuator 292 is rotatable about the axis C, which is coincident with the axis of rotation A. Thus, in the illustrated implementation the axis C also defines the axial direction B. However, in other implementations, the axis C and the axis of rotation A need not be coincident and may be offset (parallel), or transverse, to each other. The nesting ramps 302 may be described below with respect to an axial direction, which refers primarily to the direction of the axis C, but may also refer to the axial direction B when the axial direction B is the same as the axial direction of the axis C.

The nesting ramps 302 are movable with respect to each other between a retracted position (illustrated in Figs. 7 and 14) and an extended position (illustrated in Figs. 9 and 16). An intermediate position (illustrated in Figs. 8 and 15) is defined between the retracted position and the extended position. In the retracted position, the blade 34 (or other implement) is fully raised. In the extended position, the blade 34 (or other implement) is fully lowered. In the intermediate position, the blade 34 (or other implement) is between the fully raised and fully lowered positions. In the illustrated implementation, the fully raised position of the blade 34 corresponds to a longer grass setting, and the fully lowered position of the blade 34 corresponds to a shorter grass setting.

The nesting ramps 302 include at least a first ramp 304 and a second ramp 306. Any number of two or more nesting ramps 302 may be employed. In the illustrated implementation, the nesting ramps 302 include the first ramp 304, the second ramp 306, a third ramp 308, a fourth ramp 310, and a fifth ramp 312. The manual actuator 292 is operatively coupled to the first ramp 304 such that rotation of the manual actuator 292 about the axis C causes rotation of the first ramp 304 about the axis C. The manual actuator 292 is coupled directly to the first ramp 304; however, in other implementations, the manual actuator 292 may be coupled indirectly to the first ramp 304, or may be coupled directly or indirectly to any of the other nesting ramps 302.

The first ramp 304 may be mounted with respect to the deck 14 for rotation about the axis C and is fixed with respect to the deck 14 in the axial direction of the axis C. In some implementations, the manual actuator 292 may be mounted with respect to the deck 14 for rotation about the axis C and is fixed with respect to the deck in the axial direction of the axis C; in turn, the first ramp 304 may be mounted fixedly to the manual actuator 292 for movement therewith.

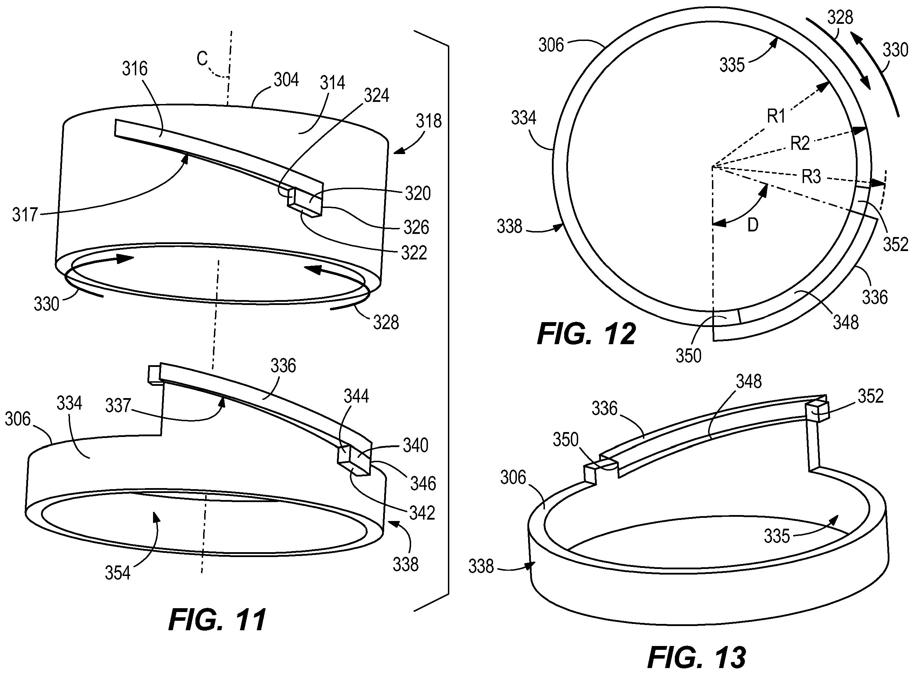

With reference to Fig. 11, the first and second ramps 304, 306 are illustrated exploded from each other. The first ramp 304 includes an annular portion 314 and a helical projection 316 having a helical surface 317. The annular portion 314 is annular about the axis C. The helical projection 316 projects radially from an outer cylindrical surface 318 of the annular portion 314. A first radial distance R1 (Fig. 17) is defined by the outer cylindrical surface 318, and a second radial distance R2 (Fig. 17) is defined by the helical projection 316 at its farthest from the axis C. The helical projection 316 extends radially from the radial distance R1 to the radial distance R2. The helical projection 316 extends circumferentially about the axis C through an arc angle D (Figs. 12 and 17) of about 70 degrees. "About" should be understood to mean +/- 10 degrees in the context of degrees. In other implementations, the arc angle D may be between about 20 degrees and about 120 degrees, or between about 30 degrees and about 310 degrees, or between about 40 degrees and about 100 degrees, or between about 50 degrees and about 90 degrees, or between about 60 degrees and about 80 degrees. The helical projection 316 also is ramped in the axial direction of the axis C. The helical projection 316 may have an angular pitch of about 182.9 degrees per inch (7.2 degrees per mm). In some implementations, the angular pitch may be between about 160 degrees per inch and about 200 degrees per inch (between about 6.3 degrees per mm and about 7.9 degrees per mm). In some implementations, the angular pitch may be between about 100 degrees per inch and about 254 degrees per inch (between about 4 degrees per mm and about 10 degrees per mm). "About" should be understood to mean +/- 10 degrees per inch in the context of angular pitch.

The first ramp 304 also includes a follower 320 projecting from the outer cylindrical surface 318 and having a follower surface 322 that is offset from the helical projection 316, e.g., spaced from the helical projection 316 in the axial direction of the axis C. The follower surface 322 may be helical and may have the same pitch as the helical projection 316 described above. The follower 320 also includes a deployment stop surface 324 and a retraction stop surface 326. A normal to the deployment stop surface 324 projects in a first direction 328 of rotation of the nesting ramps 302 about the axis C, and a normal to the retraction stop surface 326 projects in a second direction 330 of rotation of the nesting ramps 302 about the axis C. The second direction 330 of rotation is opposite the first direction 328 of rotation.

With continued reference to Fig. 11, the second ramp 306 is mounted for rotation about the axis C and for movement in the axial direction of the axis C. The second ramp 306 includes an annular portion 334 and a helical projection 336. The annular portion 334 is annular about the axis C and extends radially from an inner cylindrical surface 335 to an outer cylindrical surface 338. The inner cylindrical surface 335 is disposed approximately at the first radial distance R1, and the outer cylindrical surface 338 is disposed approximately at the second radial distance R2. The helical projection 336 projects radially from the outer cylindrical surface 338 of the annular portion 334. The helical projection 136 includes a helical surface 337. A third radial distance R3 (Figs. 12 and 17) is defined by the helical projection 336 at its farthest from the axis C. The helical projection 336 and the follower 340 extend radially from the radial distance R2 to the radial distance R3, as best illustrated in Fig. 12. The helical projection 336 extends circumferentially about the axis C through the arc angle D (Figs. 12 and 17). The helical projection 336 also is ramped in the axial direction of the axis C (Fig. 11) and may have the same pitch as the helical projection 316 described above.

The second ramp 306 also includes a follower 340 projecting from the outer cylindrical surface 338 and having a follower surface 342 that is offset from the helical projection 336, e.g., spaced from the helical projection 336 in the axial direction of the axis C. The follower surface 342 may be helical and may have the same pitch as the helical projection 316 described above. The follower 340 also includes a deployment stop surface 344 and a retraction stop surface 346. A normal to the deployment stop surface 344 projects in the first direction 328 of rotation about the axis C, and a normal to the retraction stop surface 146 projects in the second direction 330 of rotation about the axis C.

Figs. 12-13 illustrate the second ramp 306. As best illustrated in Fig. 13, the second ramp 306 defines a helical track 348 (which may also be referred to herein as a helical surface 348). The helical track 348 extends radially between the inner and outer cylindrical surfaces 335, 338 from the radial distance R1 to the radial distance R2, as best illustrated in Fig. 12. The helical track 348 extends circumferentially about the axis C through approximately the arc angle D and is bounded circumferentially by a deployment stop 350 and a retraction stop 352. The helical track 348 is configured to engage the follower 320. The follower 320 is configured to move along the helical track 348 between the deployment stop 350 and the retraction stop 352. The deployment stop 350 is configured to engage the deployment stop surface 324. The retraction stop 352 is configured to engage the retraction stop surface 126. The helical track 148 may have the same angular pitch as the helical projection 316 described above.

The third ramp 308, the fourth ramp 310, and the fifth ramp 312 each have all the same features as the second ramp 306 described above and shown in Figs. 11-13. As such, like features of the third ramp 308, the fourth ramp 310, and the fifth ramp 312 may be labeled in the figures using the same reference numerals used to describe corresponding features of the second ramp 306 with the addition of a "'" for like features of the third ramp 308, a """ for like features of the fourth ramp 310, and a "‴" for like features of the fifth ramp 312. Reference is made to the description of the second ramp 306 in order to describe the features of the third ramp 308, the fourth ramp 310, and the fifth ramp 312 such that the description need not be repeated herein. The only difference is that each of the third ramp 308, the fourth ramp 310, and the fifth ramp 312 is graduated in increasing radial size to allow for nesting.

Specifically, as illustrated in Fig. 17 (and referring to reference numerals illustrated in Figs. 11-13), the inner cylindrical surface 335' of the third ramp 308 is disposed approximately at the radial distance R2, and the outer cylindrical surface 338' of the third ramp 308 is disposed approximately at the radial distance R3. The helical track 348', the deployment stop 350', and the retraction stop 352' of the third ramp 308 extend radially between the inner and outer cylindrical surfaces 335', 338', approximately from the radial distance R2 to the radial distance R3. The helical projection 336' and the follower 340' of the third ramp 308 extend radially from approximately the radial distance R3 to a radial distance R4.

The inner cylindrical surface 335" of the fourth ramp 310 is disposed approximately at the radial distance R3, and the outer cylindrical surface 338" of the fourth ramp 310 is disposed approximately at the radial distance R4. The helical track 348", the deployment stop 350", and the retraction stop 352" of the fourth ramp 310 extend radially between the inner and outer cylindrical surfaces 335", 338", approximately from the radial distance R3 to the radial distance R4. The helical projection 336" and the follower 340" of the fourth ramp 310 extend radially from approximately the radial distance R4 to a radial distance R5.

The inner cylindrical surface 335‴ of the fifth ramp 312 is disposed approximately at the radial distance R4, and the outer cylindrical surface 338"' of the fifth ramp 312 is disposed approximately at the radial distance R5. The helical track 348"', the deployment stop 350‴, and the retraction stop 352‴ of the fifth ramp 312 extend radially between the inner and outer cylindrical surfaces 335‴, 338‴, approximately from the radial distance R4 to the radial distance R5. The helical projection 336‴ and the follower 340‴ of the fifth ramp 312 extend radially from approximately the radial distance R5 to a radial distance R6. In some implementations, the helical projection 336‴ and the follower 340‴ may be omitted from the fifth ramp 312 (the last ramp).

"Approximately" in the context of the radial distances R1-R6 should be understood to mean within tolerances that allow the nesting ramps 302 to nest, e.g., to fit one inside the other in a graduated fashion. Clearance between adjacent nest ramps 302 is nominal.

The radial distance R6 is larger than the radial distance R5; the radial distance R5 is larger than the radial distance R4; the radial distance R4 is larger than the radial distance R3; the radial distance R3 is larger than the radial distance R2; the radial distance R2 is larger than the radial distance R1. In the illustrated implementation, R1 is about 2.36 inches (about 60 mm), R2 is about 2.48 inches (about 63 mm), R3 is about 2.60 inches (about 66 mm), R4 is about 2.72 inches (about 69 mm), R5 is about 2.83 inches (about 72 mm), and R6 is about 2.95 inches (about 75 mm). In other implementations, the radial distance R1 may be between about 1.72 inches (43.69 mm) and about 3.72 inches (94.49 mm), with the remaining radial distances R2-R6 being incrementally larger than the previous radial distance by about 0.05 to about 0.3 inches (1.27 to 7.62 mm). In other implementations, the radial distance R1 may be between about 1.0 inches (54.4 mm) and about 4.0 inches (101.6 mm), with the remaining radial distances R2-R6 being incrementally larger than the previous radial distance by about 0.05 to about 0.3 inches (1.27 to 7.62 mm). "About" should be understood to mean +/- 0.1 inches in the context of radial distance.

The fifth ramp 312 (or the most distal of the nesting ramps 302 if a different number of ramps is employed) may be directly and fixedly coupled to the guard 40. In other implementations, the fifth ramp 312 may be indirectly coupled to the guard 40, and/or may be directly or indirectly coupled to other components of the blade module 28, such as the blade holder 46. The motor 36 may be fixed to, and supported by, the guard 40, which may include a degree of movement or damping to adapt to vibrations, external force, etc., or may be rigidly fixed. The motor 36 is disposed in a receptacle 354 defined by the nesting ramps 302, which may save space, particularly in the axial direction of the axis C.

The second ramp 306 hangs (e.g., by gravity) from the first ramp 304. In turn, the third ramp 308 hangs from the second ramp 306. In turn, the fourth ramp 310 hangs from the third ramp 308. In turn, the fifth ramp 312 hangs from the fourth ramp 310. In turn, the guard 40 hangs from the fifth ramp 312. In turn, the guard 40 supports the motor 36 and, in turn, the motor 36 drives the blade holder 46 and the blade(s) 34.

The height adjustment mechanism 290 may include one or more resilient members (not shown), such as damping members (e.g., foam, rubber, elastic material, tape, or the like), biasing members such as coil springs (as illustrated), one or more leaf springs, one or more cup springs, or any other type of spring or damping member, or the like, to inhibit the nesting ramps 302 from separating from each other. The height adjustment mechanism 290 may include one or more friction members (not shown), to inhibit the nesting ramps 302 from separating from each other in the axial direction of the axis C. The friction members may be separate components from the nesting ramps 302 or may be integrated with the nesting ramps 302 to provide engaging friction surfaces therebetween. The resilient members and/or friction members may be disposed in the helical tracks 348 348', 348", 348‴, or any other location, such as in the receptacle 354 or outside the nesting ramps 302. Friction between the nesting ramps 302 themselves may inhibit the nesting ramps 302 from separating from each other in the axial direction of the axis C. In any case, the resilient/damping/biasing/friction member(s) and/or the arrangement of nesting ramps 302 may allow a degree of movement or damping to adapt to vibrations, external force, etc. For example, the degree of movement or damping may allow the cutting module 30 to move resiliently or be dampened when the blade 34, blade holder 46, or guard 40 hits a hard object.

In the illustrated example, the fifth ramp 312, the motor 36, the drive shaft 38, the guard 40, the blade holder 46, and the blade 34 move together as one unit in the direction of the axis C in response to movement of the manual actuator 292.

For example, the height adjustment mechanism 290 is configured such that the blade 34 is displaced in the axial direction of the axis C about 1.5 inches (38 mm) or more in response to an angular range of 180 degrees of rotation of the manual actuator 292. In other implementations, the blade 34 may be displaced in the axial direction of the axis C about 1.57 inches (40 mm) or more in response to 180 degrees of rotation of the manual actuator 292.

The cutting module 30 is modular and can be removed from the lawn mower 12 as a unit and replaced as a unit.

In some implementations, the first ramp 304 may be driven by a servomotor (not shown). In such an implementation, the manual actuator 292 need not be employed, and the height adjustment mechanism 290 is controlled electronically through the servomotor by way of the controller 200.

In operation, blade height adjustment may be achieved manually by an operator or electronically by way of the servomotor. For manual adjustment, the operator engages the grip surface 294 of the manual actuator 292 and moves the manual actuator 292 (e.g., rotates the manual actuator 292 about the central axis C in the illustrated implementation). The operator rotates the manual actuator 292 in the first direction 328 (e.g., clockwise) to lower the blade 34 (or other implement) and in a second direction 330 (e.g., counterclockwise) to raise the blade 34 (or other implement). Figs. 7 and 14 illustrate the height adjustment mechanism 290 in the retracted position, which corresponds to the blade 34 being fully raised. When the manual actuator 292 is rotated in the first direction 328, the first ramp 304 begins to rotate. As the first ramp 304 begins to rotate, the follower 320 moves along the helical track 348 of the next directly adjacent ramp, which is the second ramp 306 in this case. The follower surface 322 engages the helical track 348 and pushes the second ramp 306 downward (away from the first ramp 304, towards the extended position) in the axial direction of the axis C until the deployment stop surface 324 engages the deployment stop 350. The third, fourth, and fifth ramps 308, 310, 312, as well as the blade 34 (and any other components configured to move as discussed above) move in the axial direction of the axis C along with the second ramp 306. Then, due to the engagement between the deployment stop surface 324 and the deployment stop 350, continued rotation of the first ramp 304 causes the second ramp 306 to begin rotating about the axis C in fixed relation to the first ramp 304. Now, the follower 340 moves along the helical track 348' of the next directly adjacent ramp, which is the third ramp 308 in this case. The follower surface 342 engages the helical track 348' and pushes the third ramp 308 downward (away from the first and second ramps 304, 306, towards the extended position) in the axial direction of the axis C until the deployment stop surface 344 engages the deployment stop 350' (as illustrated in the intermediate position shown in Figs. 8 and 15). The fourth and fifth ramps 310, 312, as well as the blade 34 (and any other components configured to move as discussed above) move in the axial direction of the axis C along with the third ramp 308. Then, due to the engagement between the deployment stop surface 344 and the deployment stop 350', continued rotation of the first and second ramps 304, 306 causes the third ramp 308 to begin rotating about the axis C in fixed relation to the first and second ramps 304, 306. Now, the follower 340' moves along the helical track 348" of the next directly adjacent ramp, which is the fourth ramp 310 in this case, and the process described above repeats until the fourth ramp 310 and the fifth ramp 312 are also deployed towards the extended position, thereby lowering the blade 34 to the fully lowered position (as illustrated in the extended position shown in Figs. 9 and 16). Thus, axial extending motion is transferred to adjacent ones of the second through fifth ramps 306, 308, 310, 312 serially (one after another in adjacent order) and one at a time. Thus, the nesting ramps 302 are telescoping.

To return the blade 34 towards the raised position, the first ramp 304 is rotated in the second direction 330. The process of extending the height adjustment mechanism 90 from the retracted position to the extended position described above now occurs in reverse order. Initially, the first ramp 304 rotates together as one unit with the second ramp 306, the third ramp 308, and the fourth ramp 310. The follower 340" of the fourth ramp 310 moves along the helical track 348‴ of the fifth ramp 312 until the retraction stop surface 346" engages the retraction stop 352"'. Now, the fourth ramp 310 stops rotating about the axis C, and continued rotation of the first ramp 304 now causes only the second and third ramps 306, 308 to rotate. The process continues until the nesting ramps 302 return to the retracted position and the blade 34 is fully raised. Thus, axial retracting motion is transferred to adjacent ones of the fifth through second ramps 312, 310, 308, 306 serially (one after another in adjacent order) and one at a time.

Thus, in one aspect, the disclosure provides a robotic garden tool, including: a deck; an implement coupled to the deck; a motor configured to drive the implement; and a height adjustment mechanism configured to control movement of the implement with respect to the deck independently from the driving of the implement, the height adjustment mechanism including nesting ramps.

The robotic garden tool of any aspect, wherein the nesting ramps are movable with respect to each other between a retracted position and an extended position, and wherein the retracted position corresponds with a first position of the implement with respect to the deck, and the extended position corresponds with a second position of the implement with respect to the deck, wherein the first position is different from the second position.

The robotic garden tool of any aspect, wherein the motor is configured to drive the implement when the implement is in the first position and when the implement is in the second position.

The robotic garden tool of any aspect, wherein the nesting ramps include at least a first ramp and a second ramp, the first ramp including a first helical surface and the second ramp including a second helical surface.

The robotic garden tool of any aspect, wherein the first and second ramps are movable with respect to each other between a retracted position and an extended position, and wherein the retracted position corresponds with a first position of the implement with respect to the deck, and the extended position corresponds with a second position of the implement with respect to the deck, wherein the first position is different from the second position.

The robotic garden tool of any aspect, wherein each of the first and second ramps is rotatable about an axis, wherein a first radius defined from the axis to the first helical surface is smaller than a second radius defined from the axis to the second helical surface to allow nesting of the first ramp with respect to the second ramp.

The robotic garden tool of any aspect, wherein the nesting ramps include at least a first ramp and a second ramp, the first and second ramps being rotatable about an axis, wherein a first radius defined from the axis to the first ramp is smaller than a second radius defined from the axis to the second ramp to allow nesting of the first ramp into the second ramp.

The robotic garden tool of any aspect, wherein the first ramp is configured to nest in the second ramp in a retracted position.

The robotic garden tool of any aspect, wherein the first and second ramps are movable with respect to each other between a retracted position and an extended position.

In another aspect, the disclosure provides a cutting module for a robotic garden tool, including: a motor configured to drive an implement; and a height adjustment mechanism configured to move the implement independently from the driving of the implement, the height adjustment mechanism including nesting ramps.

The cutting module of any aspect, wherein the nesting ramps are movable with respect to each other between a retracted position and an extended position, and wherein the retracted position corresponds with a first position of the implement, and the extended position corresponds with a second position of the implement, wherein the first position is different from the second position.

The cutting module of any aspect, wherein the motor is configured to drive the implement when the implement is in the first position and when the implement is in the second position.

The cutting module of any aspect, wherein the nesting ramps include at least a first ramp and a second ramp, the first ramp having a first helical surface and the second ramp having a second helical surface.

The cutting module of any aspect, wherein the first and second ramps are movable with respect to each other between a retracted position and an extended position, and wherein the retracted position corresponds with a first position of the implement, and the extended position corresponds with a second position of the implement, wherein the first position is different from the second position.

The cutting module of any aspect, wherein each of the first and second ramps is rotatable about an axis, wherein a first radius defined from the axis to the first helical surface is smaller than a second radius defined from the axis to the second helical surface to allow nesting of the first ramp with respect to the second ramp.

The cutting module of any aspect, wherein the nesting ramps include at least a first ramp and a second ramp, the first and second ramps being rotatable about an axis, wherein a first radius defined from the axis to the first ramp is smaller than a second radius defined from the axis to the second ramp to allow nesting of the first ramp with respect to the second ramp.

The cutting module of any aspect, wherein the first ramp is configured to nest in the second ramp in a retracted position.

The cutting module of any aspect, wherein the first and second ramps are movable with respect to each other between a retracted position and an extended position.

In yet another aspect, the disclosure provides a robotic lawn mower, including: a deck; a blade configured for movement with respect to the deck; a motor configured to rotate the blade about an axis of rotation, wherein the rotation is independent from the movement with respect to the deck; and a height adjustment mechanism configured to control the movement of the blade with respect to the deck, the height adjustment mechanism including nesting ramps.

The robotic lawn mower of any aspect, wherein the nesting ramps include at least a first ramp and a second ramp, wherein each of the first and second ramps is rotatable about an axis, wherein the first and second ramps are movable with respect to each other between a retracted position and an extended position, and wherein the retracted position corresponds with a first position of the blade, and the extended position corresponds with a second position of the blade, wherein the first position is different from the second position.

The robotic lawn mower may additionally or alternatively include any aspect of any cutting module and/or of any robotic garden tool, in any combination, that is disclosed herein.

Thus, the disclosure provides, among other things, a garden tool 12, such as an autonomous lawn mower, with blade height adjustment using nesting ramps 302.

## Claims

1. A cutting module (30) for a robotic garden tool (12), comprising:
a motor (36) configured to drive an implement formed as a blade (28); and
a height adjustment mechanism (90) configured to move the implement (28) independently from the driving of the implement (28), the height adjustment mechanism (90) including an interface (100) of meshing gear teeth (106,108), wherein
the interface (100) of meshing gear teeth includes a spiral rack (102) and a bevel gear (104), and
the spiral rack (102) is rotatable about a central axis C and the bevel gear (104) is axially translatable with respect to the central axis C while being rotatable about a gear shaft axis D.

2. The cutting module (30) of claim 1, wherein the interface (100) of meshing gear teeth includes a first set of gear teeth (108) and a second set of gear teeth (106), wherein the first set of gear teeth (108) is configured to mesh with the second set of gear teeth (106).

3. The cutting module (30) of claim 2, wherein the first set of gear teeth (108) is configured to be manually actuated to effectuate movement of the second set of gear teeth (106).

4. The cutting module (30) of claim 2, wherein the second set of gear teeth (106) is configured to be driven by a servomotor (122).

5. The cutting module (30) of claim 1, wherein the height adjustment mechanism (90) further includes a manual actuator (92) configured to move in response to manual actuation by an operator, wherein the implement (28) is configured to move with respect to a deck (14) in response to the manual actuation of the manual actuator (92).

6. The cutting module (30) of claim 1, wherein the spiral rack (102) defines a central axis (C) and is configured to rotate about the central axis (C).

7. The cutting module (30) of claim 6, wherein the bevel gear (104) is biased into engagement with the spiral rack (102) and configured to move at least axially with respect to the central axis (C).

8. The cutting module (30) of claim 7, wherein the implement (28) is configured to move at least axially in response to axial movement of the bevel gear (104).

9. The cutting module (30) of claim 1, wherein the height adjustment mechanism (90) further includes a servomotor (122) configured to drive the bevel gear (104) or the spiral rack (102).

10. The cutting module (30) of claim 1, wherein rotation of at least a portion of the interface (100) about a central axis (C) causes the implement (28) to move at least 1,905 cm per 90 degrees of rotation.

11. A robotic garden tool (12) comprising the cutting module (30) according to any one of claims 1 to 10, the robotic garden tool (12) further comprising:
a deck (14), wherein the implement (28) is movably coupled to the deck (14); and
wherein the height adjustment mechanism (90) is configured to control the movement of the implement with respect to the deck (14) independently from the motor (36).

## Patentansprüche

1. Schneidmodul (30) für ein Roboter-Gartengerät (12), umfassend:
einen Motor (36), der dazu ausgelegt ist, ein als Klinge (28) ausgebildetes Werkzeug anzutreiben; und
einen Höhenverstellmechanismus (90), der dazu ausgelegt ist, das Werkzeug (28) unabhängig vom Antrieb des Werkzeugs (28) zu bewegen, wobei der Höhenverstellmechanismus (90) eine Schnittstelle (100) aus miteinander kämmenden Verzahnungen (106, 108) aufweist,
wobei die Schnittstelle (100) aus miteinander kämmenden Verzahnungen eine Spiralzahnstange (102) und ein Kegelrad (104) umfasst, und
die Spiralzahnstange (102) um eine Mittelachse C drehbar ist und das Kegelrad (104) axial bezüglich der Mittelachse C verschiebbar ist, während es um eine Zahnradwellenachse D drehbar ist.

2. Schneidmodul (30) nach Anspruch 1,
wobei die Schnittstelle (100) aus miteinander kämmenden Verzahnungen einen ersten Verzahnungssatz (108) und einen zweiten Verzahnungssatz (106) umfasst, wobei der erste Verzahnungssatz (108) dazu ausgelegt ist, mit dem zweiten Verzahnungssatz (106) zu kämmen.

3. Schneidmodul (30) nach Anspruch 2,
wobei der erste Verzahnungssatz (108) dazu ausgelegt ist, manuell betätigt zu werden, um die Bewegung des zweiten Verzahnungssatzes (106) zu bewirken.

4. Schneidmodul (30) nach Anspruch 2,
wobei der zweite Verzahnungssatz (106) dazu ausgelegt ist, von einem Servomotor (122) angetrieben zu werden.

5. Schneidmodul (30) nach Anspruch 1,
wobei der Höhenverstellmechanismus (90) ferner einen manuellen Aktuator (92) umfasst, der dazu ausgelegt ist, sich in Reaktion auf eine manuelle Betätigung durch einen Bediener zu bewegen, wobei das Werkzeug (28) dazu ausgelegt ist, sich in Reaktion auf die manuelle Betätigung des manuellen Aktuators (92) relativ zu einem Mähdeck (14) zu bewegen.

6. Schneidmodul (30) nach Anspruch 1,
wobei die Spiralzahnstange (102) eine Mittelachse (C) definiert und dazu ausgelegt ist, sich um die Mittelachse (C) zu drehen.

7. Schneidmodul (30) nach Anspruch 6,
wobei das Kegelrad (104) mit der Spiralzahnstange (102) in Eingriff steht und dazu ausgelegt ist, sich zumindest axial bezüglich der Mittelachse (C) zu bewegen.

8. Schneidmodul (30) nach Anspruch 7,
wobei das Werkzeug (28) dazu ausgelegt ist, sich in Reaktion auf die axiale Bewegung des Kegelrads (104) zumindest axial zu bewegen.

9. Schneidmodul (30) nach Anspruch 1,
wobei der Höhenverstellmechanismus (90) ferner einen Servomotor (122) umfasst, der dazu ausgelegt ist, das Kegelrad (104) oder die Spiralzahnstange (102) anzutreiben.

10. Schneidmodul (30) nach Anspruch 1,
wobei die Drehung zumindest eines Teils der Schnittstelle (100) um eine Mittelachse (C) bewirkt, dass sich das Werkzeug (28) um mindestens 1,905 cm pro 90° Drehung bewegt.

11. Roboter-Gartengerät (12) mit dem Schneidmodul (30) nach einem der Ansprüche 1 bis 10, wobei der das Roboter-Gartengerät (12) ferner umfasst:
ein Mähdeck (14), wobei das Werkzeug (28) bewegbar mit dem Mähdeck (14) verbunden ist; und
wobei der Höhenverstellmechanismus (90) dazu ausgelegt ist, die Bewegung des Werkzeugs relativ zum Mähdeck (14) unabhängig vom Motor (36) zu steuern.

## Revendications

1. Module de coupe (30) pour un appareil de jardinage robotisé (12), comprenant :
un moteur (36) conçu pour entraîner un outil réalisé sous la forme d'une lame (28) ; et
un mécanisme de réglage en hauteur (90) conçu pour déplacer l'outil (28) indépendamment de l'entraînement de l'outil (28), le mécanisme de réglage en hauteur (90) comprenant une interface (100) de dents d'engrenage (106, 108) en engrènement,
dans lequel
l'interface (100) de dents d'engrenage en engrènement comprend une crémaillère spirale (102) et une roue conique (104), et
la crémaillère spirale (102) est apte à tourner autour d'un axe central C et la roue conique (104) est apte à se déplacer axialement par rapport à l'axe central C tout en pouvant tourner autour d'un axe d'arbre d'engrenage D.

2. Module de coupe (30) selon la revendication 1,
dans lequel l'interface (100) de dents d'engrenage en engrènement comprend un premier jeu de dents d'engrenage (108) et un second jeu de dents d'engrenage (106), le premier jeu de dents d'engrenage (108) étant conçu pour s'engrener avec le second jeu de dents d'engrenage (106).

3. Module de coupe (30) selon la revendication 2,
dans lequel le premier jeu de dents d'engrenage (108) est conçu pour être actionné manuellement afin d'assurer le mouvement du second jeu de dents d'engrenage (106).

4. Module de coupe (30) selon la revendication 2,
dans lequel le second jeu de dents d'engrenage (106) est conçu pour être entraîné par un servomoteur (122).

5. Module de coupe (30) selon la revendication 1,
dans lequel le mécanisme de réglage en hauteur (90) comprend en outre un actionneur manuel (92) conçu pour se déplacer en réponse à un actionnement manuel par un opérateur, l'outil (28) étant conçu pour se déplacer par rapport à un plateau de coupe (14) en réponse à l'actionnement manuel de l'actionneur manuel (92).

6. Module de coupe (30) selon la revendication 1,
dans lequel la crémaillère spirale (102) définit un axe central (C) et est conçue pour tourner autour de l'axe central (C).

7. Module de coupe (30) selon la revendication 6,
dans lequel la roue conique (104) est sollicitée pour venir en prise avec la crémaillère spirale (102) et est conçue pour se déplacer au moins axialement par rapport à l'axe central (C).

8. Module de coupe (30) selon la revendication 7,
dans lequel l'outil (28) est conçu pour se déplacer au moins axialement en réponse au mouvement axial de la roue conique (104).

9. Module de coupe (30) selon la revendication 1,
dans lequel le mécanisme de réglage en hauteur (90) comprend en outre un servomoteur (122) conçu pour entraîner la roue conique (104) ou la crémaillère spirale (102).

10. Module de coupe (30) selon la revendication 1,
dans lequel la rotation d'au moins une partie de l'interface (100) autour d'un axe central (C) amène l'outil (28) à se déplacer d'au moins 1,905 cm par 90 degrés de rotation.

11. Appareil de jardinage robotisé (12) comprenant le module de coupe (30) selon l'une des revendications 1 à 10, l'appareil de jardinage robotisé (12) comprenant en outre :
un plateau de coupe (14), l'outil (28) étant couplé de manière mobile au plateau de coupe (14) ; et
le mécanisme de réglage en hauteur (90) étant conçu pour commander le mouvement de l'outil par rapport au plateau de coupe (14) indépendamment du moteur (36).
